(19) Europäisches Patentamt
European Patent Office
Office européen des brevets

(11) **EP 4 502 090 A1**

(12) **EUROPEAN PATENT APPLICATION**
published in accordance with Art. 153(4) EPC

(43) Date of publication:
**05.02.2025 Bulletin 2025/06**

(21) Application number: **23774998.1**

(22) Date of filing: **23.03.2023**

(51) International Patent Classification (IPC):
***C09D 201/00*** *(2006.01)* ***C09D 5/16*** *(2006.01)*
***C09D 7/61*** *(2018.01)* ***C09D 7/63*** *(2018.01)*
***C09D 175/04*** *(2006.01)*

(52) Cooperative Patent Classification (CPC):
**C09D 5/16; C09D 7/61; C09D 7/63; C09D 175/04; C09D 201/00**

(86) International application number:
**PCT/JP2023/011395**

(87) International publication number:
**WO 2023/182404 (28.09.2023 Gazette 2023/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.03.2022 JP 2022050819**

(71) Applicant: **NITTO DENKO CORPORATION**
**Ibaraki-shi**
**Osaka 567-8680 (JP)**

(72) Inventors:
- **OMURA Shunsuke**
**Ibaraki-shi, Osaka 567-8680 (JP)**
- **EHARA Ryo**
**Ibaraki-shi, Osaka 567-8680 (JP)**

(74) Representative: **Hoffmann Eitle**
**Patent- und Rechtsanwälte PartmbB**
**Arabellastraße 30**
**81925 München (DE)**

(54) **COMPOSITION FOR FORMING COATING FILM, COATING FILM, AND ARTICLE WITH COATING FILM**

(57) The present invention relates to a composition for forming a coating film, the composition comprising a water-based resin and colloidal silica. A test coating-film sample 1 produced from the composition by a given method has a modulus of 100 MPa or greater.

*FIG. 1*

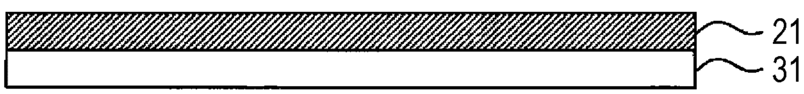


EP 4 502 090 A1

## Description

### TECHNICAL FIELD

The present invention relates to a composition for coating film formation, a coating film, and a coating film-attached article.

### BACKGROUND ART

A method for preventing a structure from suffering the adhesion of stains thereto, abrasion or scratches, etc. has commonly been used in which surfaces of the structure and structural member are protected with an antifouling coating film.

Meanwhile, when a structural member (adherend) or the like which has been coated with an antifouling coating film is handled in a factory or the like, soot, cement, or the like (hereinafter such a material is also referred to as soot and cement or the like) may accidentally adhere to the surface of the antifouling coating film before the time of replacing the antifouling coating film by a fresh one. This necessitates a cleaning operation for removing the soot and cement or the like which has adhered to the surface of the coating film.

For example, Patent Literature 1 discloses a coating composition excellent in terms of solvent resistance, recoatability, and suitability for removing scribblings or unsusceptibility to scribbling. The coating composition described in the above Patent Literature 1 contains, as essential components, a liquid organosiloxane compound, an organometal-based catalyst, an alkoxy-group-containing organosilane compound having a primary amino group or a secondary amino group, at least one kind of compound selected from among amino-modified silicone oils and amino-group-containing organosiloxane compounds, and at least one kind of compound selected from among compounds each having two or more glycidyl groups in the molecule, glycidyl-group-containing silane compounds, and glycidyl-group-containing silicone oligomers.

### CITATION LIST

### PATENT LITERATURE

Patent Literature 1: JP4721667B

### SUMMARY OF INVENTION

### TECHNICAL PROBLEM

In the above Patent Literature 1, although the suitability for removing scribblings such as markers is evaluated, the removal performance of soot such as soot and cement which is likely to adhere in a construction site is not evaluated.

An object of the present invention is to provide a composition for coating film formation, by which a coating film from which stains such as soot and cement can be easily removed even if stains such as soot-cement adhere thereto, that is, a coating film excellent in cleanability can be obtained, a coating film made of the composition, and a coating film-attached article including the coating film.

### SOLUTION TO PROBLEM

As a result of intensive studies to solve the above problems, the present inventors have found that a composition for coating film formation, which contains a water-based resin, such as a polyurethane-based resin, and colloidal silica and by which a coating film having an elastic modulus equal to or larger than a predetermined value is prepared, can form a coating film having excellent cleanability for soot and cement or the like, and have completed the present invention.

The object of the present invention can be accomplished by the following [1] to [8].

[1] A composition for coating film formation, including:

a water-based resin; and
a colloidal silica,
in which a measurement coating film sample 1 has an elastic modulus of 100 MPa or more, and the measurement coating film sample 1 is prepared by the following method:
applying the composition for coating film formation on a surface of a PET film having a thickness of 75 μm such

that a WET thickness is 500 μm; performing drying at 22°C for 24 hours to form a coating film on the PET film; and cutting the coating film in an area of 10 mm × 100 mm to prepare the measurement coating film sample 1.

[2] The composition for coating film formation according to [1], in which a content of the colloidal silica is 30 parts by mass or less with respect to 100 parts by mass of the water-based resin.
[3] The composition for coating film formation according to [1] or [2], in which the water-based resin is a polyurethane-based resin.
[4] The composition for coating film formation according to any one of [1] to [3], further including a reactive silicone oil.
[5] The composition for coating film formation according to [4], in which the reactive silicone oil is an amino-modified silicone oil.
[6] The composition for coating film formation according to any one of [1] to [5], in which a contact angle of a measurement coating film sample 2 is 60° to 100°, and the measurement coating film sample 2 is prepared by the following method:
applying the composition for coating film formation on a surface of a PET film having a thickness of 75 μm such that a WET thickness is 500 μm; and performing drying at 22°C for 24 hours to form a coating film on the above PET film to prepare the measurement coating film sample 2.
[7] A coating film made of the composition for coating film formation according to any one of [1] to [6].
[8] A coating film-attached article including the coating film according to [7].

## ADVANTAGEOUS EFFECTS OF INVENTION

In the present invention, a water-based resin and a colloidal silica are contained in a composition, and an elastic modulus of a coating film prepared from the composition is limited to an appropriate range. Therefore, it is possible to provide a composition for coating film formation by which a coating film excellent in cleanability for soot and cement or the like can be obtained, a coating film made of the composition, and a coating film-attached article including the coating film.

## BRIEF DESCRIPTION OF DRAWINGS

[FIG. 1] FIG. 1 is a cross-sectional view showing a coating film-attached article on which a coating film made of a composition for coating film formation according to the present embodiment is formed.
[FIG. 2] FIG. 2 is a cross-sectional view showing a coating film having a surface to which soot and cement or the like adheres.
[FIG. 3] FIG. 3 is a schematic diagram showing a method of an evaluation test of cleanability for soot stains.
[FIG. 4] FIG. 4 is a schematic diagram showing a method of an evaluation test of cleanability for cement stains.
[FIG. 5] FIG. 5 is a schematic diagram showing a method of an evaluation test of cleanability for coating material stains.

## DESCRIPTION OF EMBODIMENTS

In this description, "A to B" indicating a range means "A or more and B or less". In this description, the term "weight" has the same meaning as the term "mass", and the term "weight%" has the same meaning as the term "mass%".
Hereinafter, embodiments of the present invention will be described in detail. The present invention is not limited to the embodiments to be described below. In the following drawings, the same reference numerals may be given to members and portions having the same functions, and redundant description may be omitted or simplified. The embodiments described in the drawings are schematically illustrated to clearly describe the present invention, and the sizes and scales of actual products are not necessarily accurately expressed.
FIG. 1 is a cross-sectional view showing a coating film-attached article on which a coating film made of a composition for coating film formation according to an embodiment of the present invention is formed. As shown in FIG. 1, a composition for coating film formation according to an embodiment of the present invention is applied to a surface of an adherend 31 and then the applied composition is dried, thereby forming a coating film 21.
FIG. 2 is a cross-sectional view showing a coating film having a surface to which soot and cement or the like adheres. When the adherend 31 is handled in a factory or the like, soot and cement or the like 22 may adhere to a surface of the coating film 21. In this description, the easiness with which the soot and cement or the like 22 can be removed from the surface of the coating film 21 is referred to as "cleanability". The soot and cement or the like 22 adheres to the entire surface of the coating film 21 in FIG. 2, and the soot and cement or the like 22 may adhere to only a part of the surface of the coating film 21.
The composition for coating film formation according to the present embodiment will be described in detail below.

[Composition For Coating Film Formation]

The composition for coating film formation according to the present embodiment contains a water-based resin and a colloidal silica. An elastic modulus of a measurement coating film sample 1 prepared by the following method is 100 MPa or more.

The method of preparing the measurement coating film sample 1 includes: applying the composition for coating film formation on a surface of a PET film having a thickness of 75 μm such that a WET thickness is 500 μm; performing drying at 22°C for 24 hours to form a coating film on the PET film; and cutting the coating film in an area of 10 mm × 100 mm to prepare the measurement coating film sample 1.

The composition for coating film formation according to the present embodiment can form a coating film excellent in cleanability for soot and cement or the like by using a colloidal silica in combination with the water-based resin having a high elastic modulus during the formation of a coating film. Although the mechanism of the action is not clear, it is presumed that this is because the removal performance for soot and cement or the like is improved by occurrence of changes in a state of the surface of the coating film during the formation of the coating film caused by using both a water-based resin having a high elastic modulus and a colloidal silica during formation of a coating film. The present invention is not limited to the mechanism of action.

The components contained in the composition for coating film formation will be described in further detail.

(Water-based Resin)

The composition for coating film formation according to the present embodiment contains a water-based resin. Here, the water-based resin means a resin in a state of being stably dispersed in a water-based solvent as dispersoid particles. The "water-based solvent" means any one of water, an organic solvent that is soluble in water, and a mixture thereof. The water-based resin may be more environmentally friendly and more excellent in workability than solvent-based resins.

The composition for coating film formation according to the present embodiment can form a coating film excellent in cleanability for soot and cement or the like by using the colloidal silica described below in combination with the water-based resin.

As the water-based resin, various resins can be used. As described below, when a coating film is formed using the composition for coating film formation, a resin satisfying a predetermined elastic modulus can be appropriately selected and used. Examples of the water-based resin include a polyurethane-based resin, an acrylic resin, a polystyrene-based resin, a rubber-based resin, a silicone-based resin, a vinyl alkyl ether-based resin, a polyvinyl alcohol-based resin, a polyvinylpyrrodone-based resin, a polyacrylamide-based resin, a cellulose-based resin, a polyester-based resin, and a fluorine-based resin. At least one selected from an acrylic resin, a polyurethane-based resin, a polystyrene-based resin, and a rubber-based resin is preferred, and an acrylic resin and a polyurethane-based resin are more preferred.

In view of the elastic modulus during formation of the coating film, a water-based resin having 300 MPa to 600 MPa in an elastic modulus or Young's modulus (23°C) is preferred. Here, the above elastic modulus means a value measured by performing a tensile test on a film formed by heating a resin at 80°C for 6 hours. The Young's modulus (23°C) means a value measured by performing a tensile test at 23°C on a film formed of a resin in the same manner as described above.

The polyurethane-based resin is typically a reaction product of a polyol and a polyisocyanate. As the polyol component, polymer polyols such as a polycarbonate polyol, a polyacrylic polyol, a polyester polyol, and a polyether polyol are preferably used.

Typical examples of the polycarbonate polyol include: a reaction product of a polyhydric alcohol and phosgene, a chloroformate, a dialkyl carbonate or a diaryl carbonate; and a ring-opening polymer of cyclic carbonates (an alkylene carbonate, or the like). Specifically, in the reaction product of a polyhydric alcohol and phosgene, examples of the polyhydric alcohol that can be used include polyhydric alcohols such as ethylene glycol, propylene glycol, 1,3-butanediol, 1,4-butanediol, neopentyl glycol, 1,5-pentanediol, 1,6-hexanediol, and 1,9-nonanediol. In the ring-opening polymer of the cyclic carbonates, examples of the alkylene carbonate include ethylene carbonate, trimethylene carbonate, tetramethylene carbonate, and hexamethylene carbonate. The polycarbonate polyol may be a compound having a carbonate bond in the molecule and a hydroxyl group at the terminal, and may have an ester bond together with the carbonate bond.

The polyacrylic polyol is typically obtained by polymerization of a (meth)acrylate and a hydroxy group-containing monomer. Examples of the (meth)acrylate include methyl (meth)acrylate, butyl (meth)acrylate, 2-ethylhexyl (meth)acrylate, and cyclohexyl (meth)acrylate. Examples of the hydroxy group-containing monomer include: hydroxyalkyl esters of (meth)acrylic acid, such as 2-hydroxyethyl (meth)acrylate, 2-hydroxypropyl (meth)acrylate, 3-hydroxypropyl (meth)acrylate, 2-hydroxybutyl (meth)acrylate, 4-hydroxybutyl (meth)acrylate, and 2-hydroxypentyl (meth)acrylate; (meth)acrylic acid monoesters of polyhydric alcohols such as glycerin and trimethylolpropane; and N-methylol (meth) acrylamide.

The polyester polyol is typically obtained by a reaction between a polybasic acid and a polyol. Examples of the polybasic acids include: aromatic dicarboxylic acids such as orthophthalic acid, isophthalic acid, terephthalic acid, 1,4-naphthalene dicarboxylic acid, 2,5-naphthalene dicarboxylic acid, 2,6-naphthalene dicarboxylic acid, biphenyl dicarboxylic acid, and tetrahydrophthalic acid; aliphatic dicarboxylic acids such as oxalic acid, succinic acid, malonic acid, glutaric acid, adipic acid, pimelic acid, suberic acid, azelaic acid, sebacic acid, decanedicarboxylic acid, dodecanedicarboxylic acid, octadecanedicarboxylic acid, tartaric acid, alkyl succinic acid, linoleic acid, maleic acid, fumaric acid, mesaconic acid, citraconic acid, and itaconic acid; alicyclic dicarboxylic acids such as hexahydrophthalic acid, tetrahydrophthalic acid, 1,3-cyclohexane dicarboxylic acid, and 1,4-cyclohexane dicarboxylic acid; and reactive derivatives such as acid anhydrides, alkyl esters, and acid halides thereof.

The polyether polyol is typically obtained by adding an alkylene oxide to a polyhydric alcohol by ring-opening polymerization. Examples of the polyhydric alcohol include ethylene glycol, diethylene glycol, propylene glycol, dipropylene glycol, glycerin, and trimethylolpropane. Examples of the alkylene oxide include ethylene oxide, propylene oxide, butylene oxide, styrene oxide, and tetrahydrofuran.

Examples of the polyisocyanates include aromatic, aliphatic, and alicyclic diisocyanates, and dimers and trimers of these diisocyanates. Examples of the aromatic, aliphatic, and alicyclic diisocyanates include tolylene diisocyanate (TDI), diphenylmethane diisocyanate (MDI), xylylene diisocyanate (XDI), naphthylene diisocyanate (NDI), phenylene diisocyanate (PPDI), m-tetramethylxylylene diisocyanate (TMXDI), methylcyclohexane diisocyanate (hydrogenated TDI), dicyclohexylmethane diisocyanate (hydrogenated MDI), cyclohexane diisocyanate (hydrogenated PPDI), bis(isocyanatemethyl)cyclohexane (hydrogenated XDI), norbornene diisocyanate (NBDI), isophorone diisocyanate (IPDI), hexamethylene diisocyanate (HDI), butane diisocyanate, 2,4-trimethylhexamethylene diisocyanate, and 2,4,4-trimethylhexamethylene diisocyanate. In addition, dimers and trimers thereof, and polyphenylmethane diisocyanate are used. Examples of the trimers include an isocyanurate type, a biuret type, and an allophanate type, and can be appropriately used.

Among them, particularly, aliphatic or cyclic diisocyanates such as methylcyclohexane diisocyanate (hydrogenated TDI), dicyclohexylmethane diisocyanate (hydrogenated MDI), cyclohexane diisocyanate (hydrogenated PPDI), bis(isocyanatemethyl)cyclohexane (hydrogenated XDI), norbornene diisocyanate (NBDI), isophorone diisocyanate (IPDI), hexamethylene diisocyanate (HDI), hydrogenated 4,4-diphenylmethane diisocyanate (HMDI), butane diisocyanate, 2,4-trimethylhexamethylene diisocyanate, and 2,4,4-trimethylhexamethylene diisocyanate are preferably used.

These polyisocyanates may be used alone or in combination. From the viewpoint of properties, solubility, reactivity with a hydroxy group, and the like of the adherend, the type, combination, and the like of the polyisocyanates may be appropriately selected.

Among the polyisocyanates, it is preferred to use at least one kind of diisocyanate selected from the group consisting of hexamethylene diisocyanate (HDI), hydrogenated tolylene diisocyanate (HTDI), hydrogenated 4,4-diphenylmethane diisocyanate (HMDI), isophorone diisocyanate (IPDI), and hydrogenated xylene diisocyanate (HXDI), and hydrogenated 4,4-diphenylmethane diisocyanate (HMDI) is particularly preferred.

The acrylic resin is preferably obtained by, for example, emulsion polymerization of a monomer component containing an alkyl (meth)acrylate.

Examples of the alkyl (meth)acrylate include methyl (meth)acrylate, ethyl (meth)acrylate, propyl (meth)acrylate, isopropyl (meth)acrylate, n-butyl (meth)acrylate, pentyl (meth)acrylate, hexyl (meth)acrylate, heptyl (meth)acrylate, 2-ethylhexyl (meth)acrylate, octyl (meth)acrylate, isooctyl (meth)acrylate, nonyl (meth)acrylate, isononyl (meth)acrylate, decyl (meth)acrylate, isodecyl (meth)acrylate, lauryl (meth)acrylate, and tetradecyl (meth)acrylate. One alkyl (meth) acrylate may be used alone, or two or more alkyl (meth)acrylates may be used in combination. Among these, preferred examples of alkyl (meth)acrylates include n-butyl acrylate (BA) and 2-ethylhexyl acrylate (2EHA).

In this description, "(meth)acrylic" means acrylic and/or methacrylic. The acrylic resin includes a resin containing acrylic acid or a derivative thereof as a constituent monomer component, and a resin containing methacrylic acid or a derivative thereof as a constituent monomer component.

The proportion of the alkyl (meth)acrylate in the total monomer components used for the synthesis of the acrylic resin is preferably 70 mass% or more, more preferably 85 mass% or more, and still more preferably 90 mass% or more. The upper limit of the above proportion of the alkyl (meth)acrylate is not particularly limited, and is preferably 99.5 mass% or less (for example, 99 mass% or less) in general. Alternatively, the acrylic resin may be obtained by substantially polymerizing only alkyl (meth)acrylates.

Examples of the polystyrene-based resin that can be used include a styrene-butadiene block copolymer (SBS), a styrene-isoprene block copolymer (SIS), a styrene-ethylene-butylene-styrene block copolymer (SEBS), a styrene-ethylene-propylene-styrene block copolymer (SEPS), and a styrene-ethylene-ethylene-propylene-styrene block copolymer (SEEPS).

Examples of the rubber-based resin that can be used include acryl rubber, diene rubber, butyl rubber, nitrile rubber, hydrogenated nitrile rubber, fluororubber, silicone rubber, ethylene-propylene rubber, chloroprene rubber, urethane rubber, and epichlorohydrin rubber. Acryl rubber, diene rubber, and urethane rubber are particularly preferably

used. Examples of the diene rubber that can be used include natural rubber, isoprene rubber, butadiene rubber, styrene-butadiene rubber, chloroprene rubber, and acrylonitrile butadiene rubber. Styrene-butadiene rubber is preferably used.

The water-based resin may contain a polar group-containing compound. Examples of such a compound include the polar group-containing compound, a silane coupling agent, a crosslinking agent, and a silicone oil. Examples of the polar group-containing resin include an ionomer, a rosin resin, and a silicone resin.

The water-based resin in the present embodiment is particularly preferably a polyurethane-based resin obtained by causing a polycarbonate diol as a polyol component to react with a polyisocyanate. As such a polyurethane-based resin, a commercially available product can also be used, and examples thereof include Super Flex 420 (manufactured by DKS Co. Ltd.) and ST-008E (manufactured by Ube Industries, Ltd.). Super Flex 420 (manufactured by DKS Co. Ltd.) is a polyurethane-based resin obtained by causing a polycarbonate polyol, particularly hexamethylene carbonate used as a polyol component to react with an aliphatic or alicyclic diisocyanate, particularly hydrogenated 4,4-diphenylmethane diisocyanate (HMDI) used as a polyisocyanate. ST-008E (manufactured by Ube Industries, Ltd.) is a polyurethane-based resin obtained by causing polycarbonate diol used as a polyol component to react with polyisocyanate.

The content of the above compound with respect to resin components in the water-based resin is preferably 0.1 mass% to 95 mass%, more preferably 0.5 mass% to 60 mass%, still more preferably 0.5 mass% to 40 mass%, particularly preferably 0.5 mass% to 20 mass%, and most preferably 1 mass% to 20 mass% with respect to the total mass of the resin components.

The content of the resin components in the water-based resin is preferably 5 mass% to 95 mass%, more preferably 10 mass% to 90 mass%, still more preferably 15 mass% to 80 mass%, particularly preferably 20 mass% to 70 mass%, and most preferably 25 mass% to 60 mass%.

The water-based resin may be an emulsion or an emulsion-type resin using a polymer emulsion obtained by emulsion polymerization.

Examples of the emulsion resin include an emulsion containing the above resin components, and a urethane-based emulsion containing a urethane rubber is preferred.

The emulsion polymerization is performed by emulsifying monomer components in water and then performing emulsion polymerization according to a usual method. Accordingly, a water dispersion (polymer emulsion) is prepared. In the emulsion polymerization, for example, a surfactant (emulsifier), a radical polymerization initiator, and, if necessary, a chain transfer agent are appropriately mixed with the monomer components. More specifically, for example, known emulsion polymerization methods such as a batch charging method (batch polymerization method), a monomer dropping method, and a monomer emulsion dropping method can be adopted.

In the monomer dropping method and the monomer emulsion dropping method, continuous dropping or divided dropping is appropriately selected. These methods may be appropriately combined. The reaction conditions and the like are appropriately selected. The polymerization temperature is preferably, for example, 40°C to 95°C, and the polymerization time is preferably 30 minutes to 24 hours.

An initiator used for emulsion polymerization can be appropriately selected from commonly known polymerization initiators. For example, azo-based polymerization initiators such as 2,2'-azobisisobutyronitrile may be preferably used. Other examples of the polymerization initiator include: persulfates such as potassium persulfate; peroxide initiators such as benzoyl peroxide and hydrogen peroxide; substituted ethane initiators such as phenyl-substituted ethane; and aromatic carbonyl compounds.

Still another example of the polymerization initiator is a redox-based initiator obtained by combining a peroxide and a reducing agent. One kind of polymerization initiator may be used alone, or two or more kinds of polymerization initiators may be used in combination. The amount of the polymerization initiator used may be a usual amount, and may be 0.005 parts by mass to 1 part by mass, or 0.01 parts by mass to 1 part by mass, with respect to 100 parts by mass of the monomer raw material.

As the emulsifier, any of an anionic emulsifier, a nonionic emulsifier, and a cationic emulsifier may be used. One kind of these may be used alone, or two or more kinds thereof may be used in combination. Generally, anionic type or nonionic type emulsifiers are preferably used.

Examples of the anionic emulsifier include sodium lauryl sulfate, ammonium lauryl sulfate, sodium dodecylbenzene sulfonate, sodium polyoxyethylene alkyl ether sulfate, ammonium polyoxyethylene alkyl phenyl ether sulfate, and sodium polyoxyethylene alkyl phenyl ether sulfate.

Examples of the nonionic emulsifier include polyoxyethylene alkyl ethers and polyoxyethylene alkyl phenyl ethers.

A radical polymerizable emulsifier (reactive emulsifier) having a structure obtained by introducing a radical polymerizable group such as a propenyl group into an anionic or nonionic emulsifier as described above may be used. The emulsifiers are not particularly limited, and from the viewpoint of the polymerization stability during the synthesis of the resin, the storage stability of the pressure-sensitive adhesive composition, and the like, an embodiment in which only an emulsifier having no radical polymerizable group is used can be preferably adopted.

In the above polymerization, various commonly known chain transfer agents (which may also be understood as

molecular weight modifiers or polymerization degree modifiers) may be used as necessary. The chain transfer agent may be one or two or more kinds selected from mercaptans such as n-lauryl mercaptan, tert-lauryl mercaptan, glycidyl mercaptan, and 2-mercaptoethanol. Among them, examples of preferred chain transfer agents include n-lauryl mercaptan and tert-lauryl mercaptan.

When the chain transfer agent is used in the polymerization of the monomer raw material, the amount of the chain transfer agent used is not particularly limited. For example, the amount of the chain transfer agent used may be 0.001 parts by mass to 0.5 parts by mass, and is preferably 0.01 parts by mass to 0.1 parts by mass, with respect to 100 parts by mass of the monomer raw material.

The Mw of the obtained resin is typically $10 \times 10^4$ or more, and usually suitably $20 \times 10^4$ or more. From the viewpoint of suitably achieving both adhesive force and cohesive force, the Mw is preferably $30 \times 10^4$ or more, more preferably $40 \times 10^4$ or more, and still more preferably $50 \times 10^4$ or more. The upper limit of Mw is not particularly limited, and may be, for example, $500 \times 10^4$ or less, typically $200 \times 10^4$ or less, and preferably $150 \times 10^4$ or less.

The Mw can be adjusted by, for example, the kind and amount of the polymerization initiator used, the polymerization temperature, the kind and amount of the emulsifier used, the presence or absence of use of the chain transfer agent, the kind and amount of the chain transfer agent when used, the composition of the monomer raw material, the kind and degree of crosslinking (gel fraction), and the like.

(Colloidal Silica)

The composition for coating film formation according to the present embodiment contains a colloidal silica. The colloidal silica can impart hydrophilicity to the composition for coating film formation and improve antifouling properties. In particular, the composition for coating film formation according to the present embodiment can form a coating film excellent in cleanability for soot and cement or the like by using the above-described water-based resin in addition to colloidal silica.

Examples of the colloidal silica include a colloid of silicon dioxide (silicic acid) microparticles, as described in JPS53-112732A, JPS57-9051B, JPS57-51653B, or the like.

The colloidal silica may optionally contain, for example, alumina, and sodium aluminate, and may optionally contain a stabilizer such as an inorganic base (for example, sodium hydroxide, potassium hydroxide, lithium hydroxide, and ammonia) and an organic base (for example, tetramethylammonium).

Such a colloidal silica is not particularly limited, and can be produced by a known sol-gel method or the like, specifically, for example, a sol-gel method or the like described in Werner Stober et al; J.Colloid and Interface Sci., 26,62-69(1968), Rickey D.Badley et al; Langmuir 6,792-801(1990), Journal of the Japan Society of Colour Material, 61[9] 488-493(1988).

As the colloidal silica, a water-dispersed colloidal silica in which spherical silica particles are dispersed in water is preferably used from the viewpoint of antifouling properties. The spherical silica particles dispersed in the colloidal silica preferably have an average particle diameter of 5 nm to 100 nm. When the average particle diameter is 5 nm or more, a hydrophilization effect can be expected. On the other hand, when the average particle diameter is 100 nm or less, the transparency of a film can be maintained.

Here, the above average particle diameter means an average particle diameter based on the number of particles, and can be measured by a particle size distribution measurement device using a dynamic light scattering method as a measurement principle. Examples of such a particle size distribution measurement device include "zeta-potential, particle size, and molecular weight measurement system ELSZ 2000 ZS" (trade name) manufactured by Otsuka Electronics Co. Ltd. employing a homodyne optical system as a frequency analysis method.

The content of the colloidal silica (solid content) in the composition for coating film formation according to the present embodiment is preferably 0.1 parts by mass or more, more preferably 1 part by mass or more, and still more preferably 3 parts by mass or more with respect to 100 parts by mass of the water-based resin. When the above content of the colloidal silica (solid content) is 0.1 parts by mass or more, a coating film having high uniformity can be formed regardless of the coating method, and a hydrophilization effect can be expected.

In addition, the content of the colloidal silica (solid content) in the composition for coating film formation according to the present embodiment is preferably 100 parts by mass or less, more preferably 75 parts by mass or less, still more preferably 50 parts by mass or less, and particularly preferably 30 parts by mass or less with respect to 100 parts by mass of the water-based resin. When the above content of the colloidal silica (solid content) is 100 parts by mass or less, deterioration in the appearance of the coating film can be prevented, and a clean coating film can be produced regardless of the coating method.

A viscosity of the colloidal silica is preferably 1 mPa • s to 25 mPa • s.

The pH of the colloidal silica is preferably 7 to 12, and more preferably 8 to 10.

As such colloidal silica, commercially available products can be used, and specific examples thereof include trade names "SNOWTEX (registered trademark)-XL", "SNOWTEX (registered trademark)-YL", "SNOWTEX (registered trademark)-ZL", "PST-2", "SNOWTEX (registered trademark)-20", "SNOWTEX (registered trademark)-30", "SNOWTEX

(registered trademark)-30L", "SNOWTEX (registered trademark)-C", "SNOWTEX (registered trademark)-CM", "SNOWTEX (registered trademark)-O", "SNOWTEX (registered trademark)-OS", "SNOWTEX (registered trademark)-OL", "SNOWTEX (registered trademark)-50", and "SNOWTEX (registered trademark)-CXS" (all manufactured by Nissan Chemical Industries, Ltd.), trade names "ADELITE (registered trademark) AT-30", "ADELITE (registered trademark) AT-40", and "ADELITE (registered trademark) AT-50" (all manufactured by Nippon Aerosil Co., Ltd.).

(Reactive Silicone Oil)

The composition for coating film formation according to the present embodiment preferably further contains a reactive silicone oil. The reactive silicone oil is a silicone oil having a reactive group on at least at one of both ends, one end, and a side chain of a main chain composed of siloxane bonds.

A coating film formed of a composition containing the reactive silicone oil has an increased water contact angle and an achieved balance due to the reactive silicone oil, so that cleanability is exhibited not only for soot and cement but also for a coating material that is an oily stain. The mechanism of the action is not clear, and it is presumed that this is because the reactive silicone oil is induced by a functional group of the oily stain and transferred to the surface, and the oil is interposed at an interface between the oily stain and the coating film. The present invention is not limited to the mechanism of action.

The above main chain (main skeleton) composed of the siloxane bonds is not particularly limited, and poly(dimethylsiloxane) or the like can be preferably used. In addition, the reactive group is not particularly limited as long as it is an atomic group showing reactivity with polarity, and examples thereof include functional groups containing an oxygen atom, a nitrogen atom, a sulfur atom, or the like with polarity, which are attracted to a hydroxy group or the like present on an oily stain side. Specific examples thereof include a hydrogen atom, a hydroxy group, an amino group, an aminoalkyl group, a carbinol group, an epoxy group, a carboxy group, and a mercapto group. One kind of reactive group may be used alone, or two or more kinds of reactive groups may be used in combination.

Among them, as the reactive silicone oil, an amino-modified silicone oil having an amino group or an aminoalkyl group as a reactive group, an epoxy-modified silicone oil having an epoxy group as a reactive group, and a mercapto-modified silicone oil having a mercapto group as a reactive group are preferred from the viewpoint of cleanability for a coating material that is an oily stain, and an amino-modified silicone oil is particularly preferred.

The amino-modified silicone oil is a silicone oil having a structure in which some of methyl groups of a silicone oil have been replaced with one or more amino groups or aminoalkyl groups. The modified portion(s) may be any of a side chain, one end, both ends, or both ends of a side chain. In addition, an emulsion type may be used.

As the amino-modified silicone oil, an amino-modified silicone oil generally available commercially can be used as such. It is particularly preferred to use an amino-modified silicone oil represented by the following general formula (1). High reliability can be obtained by using the amino-modified silicone oil represented by the general formula (1).

[Chem. 1]

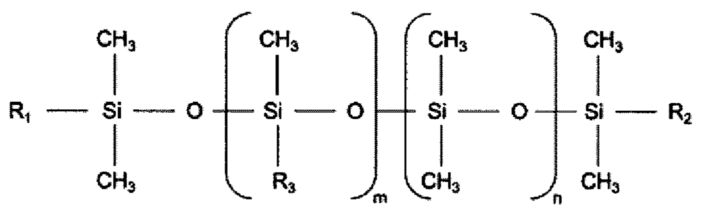

· · · (1)

In the above formula (1), $R_1$, $R_2$, and $R_3$ each represent an amino-modified alkyl group or an amino group, and examples thereof include $-C_3H_6-NH_2$, $-C_6H_4-NH_2$, $-C_3H_6-NH-C_2H_4-NH_2$, $-C_3H_6-NH-CH_3$, and $-NH_2$. $R_1$, $R_2$, and $R_3$ may be the same as or different from each other. $R_1$, $R_2$, and $R_3$ may contain any one or two or more kinds of an alkyl group, an epoxy group, a carboxy group, a methacryl group, a carbinol group, a hydroxy group, a mercapto group, a polyether group, a phenyl group, a fluoroalkyl group, an aralkyl group, and a hydrogen atom.

In the above formula (1), the number of repetitions m is a positive number of 0 to 50, and the number of repetitions n is a positive number of 0 to 50. Particularly preferably, m is within the range of 0 to 20, and n is within the range of 0 to 20.

Particularly preferably used as the amino-modified silicone oil represented by the above formula (1) are both-end aminopropyl-modified dimethylpolysiloxanes represented by the formula (1) in which m is usually 0 to 40 and n is usually 0 to 40. Preferred of these are both-end aminopropyl-modified dimethylpolysiloxanes in which m is 0 to 20 and n is 0 to 20.

Amino-modified silicone oils including the amino-modified silicone oil represented by the above general formula (1) can be obtained by commonly known production methods.

Examples of the amino-modified silicone oil include KF-868, KF-865, KF-864, KF-859, KF-393, KF-860, KF-877,

KF-880, KF-8004, KF-8002, KF-8005, KF-867, X-22-3820W, KF-869, KF-861, X-22-3939A, PAM-E, KF-8010, X-22-161A, X-22-161B, KF-8012, KF-8008, X-22-1660B-3, KF-857, KF-8001, KF-862, X-22-9192, and KF-858, manufactured by Shin-Etsu Chemical Co., Ltd., BY16-205, FZ-3760, SF8417, BY16-849, BY16-892, FZ-3785, BY16-872, BY16-213, BY16-203, BY16-898, BY16-890, BY16-891, BY16-893, BY16-871, and BY16-853U, manufactured by Dow Corning Toray Co., Ltd., FM-3311, FM-3321, and MF-3325, manufactured by Chisso Corp., TSF4702, TSF4703, TSF4704, TSF4705, TSF4706, TSF4707, TSF4708, TSF4709, XF42-B1989, XF42-B8922, XF42-C0330, XF49-C1109, SILSOFT A-553, SILSOFT A-843, SILSOFT A-858, and XF-42-A3335, manufactured by Momentive Performance Materials Inc., and WACKER L652, WACKER L653, WACKER L655, WACKER L656, WACKER FINISH WR1100, WACKER FINISH WR1200, WACKER FINISH WR1300, WACKER FINISH WR1600, WACKER FINISH WT1250, and WACKER FINISH WT1650, manufactured by Wacker Asahikasei Silicone Co., Ltd.

Examples of the emulsion type include POLON-MF-14, POLON-MF-14E, POLON-MF-14EC, POLON-MF-29, POLON-MF-39, POLON-MF-44, POLON-MF-52, KM-907, X-52-2265, POLON-MF-51, KM-9771, and POLON-MF-63, manufactured by Shin-Etsu Chemical Co., Ltd., FZ-4632, FZ-4635, FZ-4640, FZ-4645, FZ-4658, FZ-4671, and FZ-4678, manufactured by Japan Yunker Co., Ltd.; DOWSILtm FZ-4634 EX, DOWSILtm FZ-4658, DOWSILtm SM 8709 SR Emulsion, SM 8704C/SM8904, manufactured by Dow Corning Toray Co., Ltd.; and WACKER (registered trademark) FINISH CT 45 E, manufactured by Wacker Asahikasei Silicone Co., Ltd.

The epoxy-modified silicone oil is a silicone oil having a structure in which some of the methyl groups of a silicone oil have been replaced by one or more epoxy groups. The modified portion(s) may be any of a side chain, one end, both ends, or both ends of a side chain.

As the epoxy-modified silicone oil, an epoxy-modified silicone oil generally available commercially can be used as such. Examples of the epoxy-modified silicone oil include X-51-1264, POLON-MF-18T, X-22-343, KF-101, KF-1001, X-22-2000, X-22-2046, KF-102, X-22-163, KF-105, X-22-163A, X-22-163B, X-22-163C, X-22-169AS, X-22-169B, X-22-173BX, X-22-173DX, and X-22-9002, manufactured by Shin-Etsu Chemical Co., Ltd., DOWSILtm BY 22-818 EX Emulsion, DOWSILtm BY 22-893, DOWSILtm FZ-4602, and DOWSILtm SM 8716 EX Emulsion, manufactured by Dow Corning Toray Co., Ltd.

The mercapto-modified silicone oil is a silicone oil having a structure in which some of the methyl groups of a silicone oil are replaced with one or more mercapto groups. The modified portion(s) may be any of a side chain, one end, both ends, or both ends of a side chain.

As the mercapto-modified silicone oil, a mercapto-modified silicone oil generally available commercially can be used as such. Examples of the mercapto-modified silicone oil include KM-9769, KF-2001, KF-2004, X-22-167B, and X-22-167C manufactured by Shin-Etsu Chemical Co., Ltd.

The content of the reactive silicone oil in the above composition is preferably 0.1 parts by mass to 100 parts by mass, and more preferably 3 parts by mass to 50 parts by mass, with respect to 100 parts by mass of the water-based resin. Within such a range, the water contact angle is increased and balance is achieved by the reactive silicone oil, so that cleanability is exhibited not only for soot and cement but also for a coating material that is an oily stain. One kind of reactive silicone oil may be used, or two or more kinds of reactive silicone oils may be used in combination.

The content of the amino-modified silicone oil in the above composition is preferably 0.1 parts by mass to 100 parts by mass, and more preferably 3 parts by mass to 50 parts by mass, with respect to 100 parts by mass of the water-based resin. Within such a range, the water contact angle is increased and balance is achieved by the amino-modified silicone oil, so that cleanability is exhibited not only for soot and cement but also for a coating material that is an oily stain. One kind of amino-modified silicone oil may be used, or two or more kinds of amino-modified silicone oils may be used in combination.

<Elastic modulus of Measurement Coating Film Sample 1: 100 MPa or More>

The measurement coating film sample 1 produced using the composition for coating film formation according to the present embodiment by the following method has an elastic modulus of 100 MPa or more.
applying the composition for coating film formation on a surface of a PET film having a thickness of 75 $\mu$m such that a WET thickness is 500 $\mu$m; performing drying at 22°C for 24 hours to form a coating film on the PET film; and cutting the coating film in an area of 10 mm $\times$ 100 mm to prepare the measurement coating film sample 1.

Here, the WET thickness is a film thickness immediately after coating.

The elastic modulus of the measurement coating film sample 1 can be measured using, for example, a tensile tester (Autograph AGX-V, manufactured by Shimadzu Corporation) on the coating film alone, which has been peeled off from the PET film of the sample.

When the elastic modulus is 100 MPa or more, the cleanability for soot and cement or the like is excellent. The elastic modulus is preferably 150 MPa or more, and more preferably 200 MPa or more.

<Contact Angle>

A contact angle of a measurement coating film sample 2 produced using the composition for coating film formation according to the present invention by the following method is preferably 10° to 100° from the viewpoint of cleanability for soot and cement, and is preferably 60° to 100° from the viewpoint of cleanability for soot and cement and coating material.

applying the composition for coating film formation on a surface of a PET film having a thickness of 75 μm such that a WET thickness is 500 μm; and performing drying at 22°C for 24 hours to form a coating film on the above PET film to prepare the measurement coating film sample 2.

The above contact angle is measured by dropping 2 μL of water on a surface of a coating film of the above measurement coating film sample 2, and measuring a water contact angle of the surface of the coating film after 5 minutes using a contact angle meter (for example, Drop Master, DM-701, manufactured by Kyowa Interface Science Co., Ltd.) by a sessile drop method according to JIS R 3257.

More specifically, in an embodiment in which the composition for coating film formation according to the present embodiment has particularly excellent cleanability for soot and cement, the above contact angle is preferably as low as possible and is preferably 100° or less, more preferably 90° or less, still more preferably 80° or less, yet still more preferably 70° or less, and particularly preferably 60° or less. When the above contact angle is within the above range, the cleanability for soot and cement or the like is excellent.

In an embodiment in which the composition for coating film formation according to the present embodiment is excellent in cleanability for a coating material in addition to cleanability for soot and cement, the above contact angle is more preferably 60° or more, and more preferably 65° or more, and is preferably 100° or less, more preferably 90° or less, and still more preferably 85° or less. When the above contact angle is within the above range, the cleanability for soot and cement and the coating material is excellent. In this embodiment, it is particularly preferable that the composition for coating film formation contains the reactive silicone oil described above, particularly, an amino-modified silicone oil.

(Other Components)

The composition for coating film formation according to the present embodiment may contain any other appropriate oils as long as the effects of the present invention are not impaired. Examples of such other oils include various non-reactive silicone oils such as a dimethyl silicone oil, a phenyl-modified silicone oil, and a long-chain-alkyl-modified silicone oil, liquid paraffins, surfactants, liquid hydrocarbons, fluorinated oils, waxes, petrolactam, animal fats or oils, and fatty acids. Only one kind of these may be used, or two or more kinds thereof may be used.

There are cases where the composition for coating film formation containing any of such other oils can give coating films having still further improved cleanability.

The above composition for coating film formation may contain any other appropriate additives as long as the effects of the present invention are not impaired. Examples of the other additives include ultraviolet absorbers, light stabilizers, antioxidants, aging inhibitors, antistatic agents, pigments, colorants, leveling agents, and thickeners.

A coating film can be formed from the composition for coating film formation according to the present embodiment by applying the composition to an adherend and drying the applied composition. Even through drying at room temperature (25°C), a highly even coating film can be obtained.

A known application method, such as spraying, application with a brush, roller coating, curtain flow coating, roll coating, dipping, or coater coating, can be used to directly apply the composition to any adherend.

Specific examples of the adherend include various structures including metallic products, woodwork products, plastic products, glass products, medical members (e.g., catheters, stents, gloves, pincettes, vessels, guides, and trays), members related to coating (e.g., robot arms, coating booths, hangers, covering materials, and ovens), buildings (internal and external wall surfaces, floor surfaces, and ceiling surfaces), electronic appliances, transportation vehicles (e.g., vehicles such as motor vehicles, two wheelers, and railroad cars and ships), and constituent structural members for these.

<Coating Film>

The coating film according to the present embodiment is made of the above-described composition for coating film formation, and is a coating film having excellent surface cleanability.

The coating film can have any desired appropriate thickness depending on intended applications, use environments, or the like. The thickness of the coating film is preferably 50 μm to 1,000 μm, and more preferably 80 μm to 500 μm. In cases when the thickness of the coating film is 50 μm or larger, the effect of protecting the adherend can be sufficiently obtained. Meanwhile, in cases when the thickness of the coating film is 1,000 μm or less, the efficiency of forming the coating film is excellent.

The thickness of the above coating film can be measured, for example, with RI-205, manufactured by PEAKOCK

Co., Ltd.

<Coating Film-Attached Article>

The coating film-attached article according to the present embodiment includes the above-described coating film. The coating film-attached article including a coating film can be obtained by applying the above composition for coating film formation to an adherend (article) and drying the applied composition. Even through drying at room temperature (25°C), a highly even coating film can be obtained. The application method of the composition for coating film formation and the adherend are as described above in the section of the composition for coating film formation.

## Examples

The present invention is described below in more detail by reference to Examples, but the present invention is not limited to the following Examples in any way. Hereinafter, "parts" means "parts by mass".

<Elastic Modulus>

Each of the compositions for coating film formation of Examples and Comparative Examples was applied to a surface of a PET film (Lumirror S10#75, manufactured by Toray Industries, Inc.) having a thickness of 75 μm using an applicator (YBA Baker Applicator, manufactured by Yoshimi Seiki Co., Ltd.) such that a WET thickness is 500 μm, and dried at 22°C for 24 hours to form a coating film, and the coating film was cut in an area of 10 mm × 100 mm to obtain the measurement coating film sample 1. The elastic modulus of the coating film was evaluated using a tensile tester (Autograph AGX-V, manufactured by Shimadzu Corporation) on the coating film alone, which has been peeled off from the PET film of the measurement coating film sample 1. The results are shown in Tables 1 to 3.

<Contact Angle>

Each of the compositions for coating film formation of Examples and Comparative Examples was applied to a surface of a PET film (Lumirror S10#75, manufactured by Toray Industries, Inc.) having a thickness of 75 μm using an applicator (YBA Baker Applicator, manufactured by Yoshimi Seiki Co., Ltd.) such that a WET thickness is 500 μm, and dried at 22°C for 24 hours to form a coating film, thereby producing the measurement coating film sample 2. For the measurement coating film sample 2, 2 μL of water was dropped on the surface of the coating film, and the water contact angle of the surface of the coating film after 5 minutes was measured by using a contact angle meter (Drop Master, DM-701, manufactured by Kyowa Interface Science Co., Ltd.) with a sessile drop method according to JIS R 3257. The results are shown in Tables 1 to 3.

<Evaluation Test of Cleanability for Soot Stain>

An evaluation test of cleanability for soot stains was performed according to a method shown in FIG. 3 according to JSTM J 7602: 2003: an accelerated test method for stains of external wall materials for construction. Specifically, first, 10 mg of carbon black (Orion Engineered Carbons, FW200), 45 mg of Kanto loam (Class 8 of JIS test powder 1 manufactured by APPIE), 135 mg of Yellow ocher (PG230 manufactured by Holbein Works, Ltd.), and 10 mg of silica (Class 3 of JIS test powder 1 manufactured by APPIE) were added to 200 mL of water, and the mixture was stirred at 1000 rpm for 3 minutes using a homo disperser to obtain a stain liquid.

Subsequently, a color difference of the above measurement coating film sample 2 was measured using a color difference meter (CR-20, manufactured by Konica Minolta, Inc.) to obtain "initial hue" ($L_1$, $a_1$, $b_1$). Then, 0.5 mL of the stain liquid was dropped on the surface of the above measurement coating film sample 2 using a pipetman and was dried overnight, the stained portion was wiped with a cloth moistened with water, and then the hue of the same area was measured and defined as "post-washing hue" ($L_2$, $a_2$, $b_2$). The "initial hue" was compared with the "post-washing hue", and the color difference ΔE was calculated using the following formula.

$$\Delta E = \{(\Delta L^*)^2 + (\Delta a^*)^2 + (\Delta b^*)^2\}^{1/2}$$

$$\Delta L = L_1 - L_2$$

$$\Delta a = a_1 - a_2$$

$$\Delta b = b_1 - b_2$$

$L_1$, $a_1$, and $b_1$ mean the "initial hue", and $L_2$, $a_2$, and $b_2$ mean the "post-washing hue".

[Evaluation of Cleanability for Soot Stain]

The evaluation of cleanability for soot stains was evaluated in the following three levels.

∘∘:

$$\Delta E \leq 2.2$$

∘:

$$2.2 < \Delta E < 11$$

×:

$$11 \leq \Delta E$$

The results are shown in Tables 1 to 3.

<Evaluation Test of Cleanability for Cement Stain>

The evaluation test of the cleanability for cement stains was performed according to a method shown in FIG. 4. Specifically, first, the above measurement coating film sample 2 was attached to an acrylic resin substrate (transparent, thickness: 2 mm, 150 mm × 100 mm) with a transparent adhesive tape to obtain a test piece. In a 300 mL disposable cup were added 100 g of water and 30 g of cement (ordinary Portland cement manufactured by Katei kagaku kogyo Co., Ltd.), and the mixture was stirred for 2 minutes with a spoon to obtain a cement paste. On a surface of the test piece, a 3 cm end of pure cotton water thread (No. 10, manufactured by Takumi, thread thickness: 1.1 mm, length: 23 cm) was put into a vinyl chloride ring frame (inner diameter: 25 mm, outer diameter: 32 mm, height: 1 cm), and 10 g of the cement paste was poured into the vinyl chloride ring frame from above, and the ring frame was filled with the cement paste to form cement deposits. Five cement deposits were prepared for one sample. A loop was formed at the end of the pure cotton water thread sticking out from the cement deposit, the loop of the pure cotton water thread was hooked to a tensile tester (MX2-500N manufactured by IMADA, force gauge: ZTS-500N manufactured by IMADA) to pull the cement deposit, and a peeling force against the sample was obtained as a cement adhesion force.

[Evaluation of Cleanability for Cement Stain]

The evaluation of cleanability for cement stains was evaluated in the following two levels.

∘:

$$\text{cement adhesion force} < 5\ (\text{N})$$

×:

$$5\ (\text{N}) \leq \text{cement adhesion force}$$

The results are shown in Tables 1 to 3.

<Evaluation Test of Cleanability for Coating Material Stain>

An evaluation test of cleanability for coating material stains was performed according to a method shown in FIG. 5 according to JIS K 5600 5-6 (1999): a cross-cut test method. Specifically, first, each of compositions for coating film formation of Examples and Comparative Examples was applied to a bonded steel plate (100 mm × 150 mm × 2 mm) with a brush in a liquid film thickness of 100 μm and dried for one day to obtain a test piece. An oily coating material was applied to

the test piece with a brush in a liquid film thickness of 100 μm, dried at room temperature for one day, then the test piece was cross-cut at a width of 4 mm, and an adhesive tape (No. 31B, manufactured by Nitto Denko Corporation) firmly adhered to the cross-cut portion and peeled off upward. The residues of the coating material stains were checked and evaluated at 0 point to 10 points. The case where there was no residue was evaluated as 0 point, and the case where all the residues were remained was evaluated as 10 points.

The evaluation of cleanability for the coating material stains was evaluated in the following two levels.

◦: 0 point to 2 points
×: 3 points to 10 points

The results are shown in Tables 1 to 3.

<Evaluation of Cleanability>

For the above cleanability tests (the evaluation test of cleanability for soot stains, the evaluation test of cleanability for cement stains, and the evaluation test of cleanability for coating material stains), the evaluation was performed as follows. The results are shown in Tables 1 to 3.

[Evaluation (Soot + Cement)]

◦◦: the cleanability for soot stains is evaluated as ◦◦, and the cleanability for cement stains is evaluated as ◦.
◦: the cleanability for soot stains is evaluated as ◦, and the cleanability for cement stains is evaluated as ◦.
×: at least one of the cleanability for soot stains and the cleanability for cement stains is evaluated as ×.

[Evaluation (Soot + Cement + Coating Material)]

◦◦: the cleanability for soot stains is evaluated as ◦◦, the cleanability for cement stains is evaluated as ◦ and the cleanability for coating material stains is evaluated as ◦.
◦: the cleanability for soot stains is evaluated as ◦, the cleanability for cement stains is evaluated as ◦ and the cleanability for coating material stains is evaluated as ◦.
Δ: the cleanability for soot stains is evaluated as ◦◦ or ◦, the cleanability for cement stains is evaluated as ◦, and the cleanability for coating material stains is evaluated as ×.
×: the cleanability for soot stains is evaluated as ◦ or ×, the cleanability for cement stains is evaluated as ×, and the cleanability for coating material stains is evaluated as ×.

<Preparation of Composition for Coating Film Formation>

(Example 1)

Super Flex 420 (100 parts (hereinafter, in terms of the resin solid content weight as 100 parts)) and POLON-MF-14EC (5 parts) were stirred at 2000 rpm for 1 minute using a homo disperser (LABOLUTION, manufactured by PRIMIX), and SNOWTEX C (12.5 parts) was gradually added while stirring at 2000 rpm, and after all of them were added, the mixture was finally stirred at 3000 rpm for 3 minutes to obtain a composition for coating film formation of Example 1.

(Examples 2 to 28 and Comparative Examples 1 to 4)

Compositions for coating film formation of Examples 2 to 28 and Comparative Examples 1 to 4 were obtained in the same manner as in Example 1 except that the kinds and contents of the components were changed as shown in Tables 1 to 3. In Tables 1 to 3, "-" means that the component is not contained.

Details of the components in Tables 1 to 3 are as follows.

<Polyurethane-Based Resin>

- Super Flex 420: manufactured by DKS Co. Ltd.
- ST-008E: manufactured by Ube Industries, Ltd.
- UW-1005E: manufactured by Ube Industries, Ltd.
- SF 460: manufactured by Ube Industries, Ltd.

<Colloidal Silica>

- SNOWTEX 30: manufactured by Nissan Chemical Corporation
- SNOWTEX C: manufactured by Nissan Chemical Corporation
- SNOWTEX CM: manufactured by Nissan Chemical Corporation

<Reactive Silicone Oil>

(Amino-modified Silicone Oil)

- POLON-MF-14EC: manufactured by Shin-Etsu Chemical Co., Ltd.
- POLON-MF-14E: manufactured by Shin-Etsu Chemical Co., Ltd.
- POLON-MF-14: manufactured by Shin-Etsu Chemical Co., Ltd.
- KM-9771: manufactured by Shin-Etsu Chemical Co., Ltd.

(Epoxy-modified Silicone Oil)

- X-51-1264: manufactured by Shin-Etsu Chemical Co., Ltd.

(Mercapto-modified Silicone Oil)

- KM-9769: manufactured by Shin-Etsu Chemical Co., Ltd.

<Non-reactive Silicone Oil>

(Phenyl-modified Silicone Oil)

- KM-9739: manufactured by Shin-Etsu Chemical Co., Ltd.

(Long-chain Alkyl-modified Silicone Oil)

- X-52-8046: manufactured by Shin-Etsu Chemical Co., Ltd.

(Dimethyl Silicone Oil)

- KM-862T: manufactured by Shin-Etsu Chemical Co., Ltd.

[Table 1]

| | | | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|---|
| Urethane resin | | Super Flex 420 | 100 | - | 100 | 100 | 100 | 100 | 100 | 100 | 100 | 100 | 100 |
| | | ST-008E | - | 100 | - | - | - | - | - | - | - | - | - |
| | | UW-1005E | - | - | - | - | - | - | - | - | - | - | - |
| | | SF460 | - | - | - | - | - | - | - | - | - | - | - |
| Colloidal silica | | SNOWTEX 30 | 12.5 | 12.5 | 5.0 | 7.5 | 10.0 | 25.0 | - | - | - | - | - |
| | | SNOWTEX C | - | - | - | - | - | - | 12.5 | 12.5 | 12.5 | 12.5 | 12.5 |
| | | SNOWTEX CM | - | - | - | - | - | - | - | - | - | - | - |
| Reactive silicone oil | Amino-modified silicone oil | POLON-MF-14EC | 5.0 | 5.0 | 7.5 | 7.5 | 7.5 | 7.5 | 0.0 | 5.0 | 7.5 | 10.5 | 50.0 |
| Contact angle | | (°) | 64.7 | 86.0 | 87.8 | 87.4 | 86.0 | 73.1 | 24.6 | 64.7 | 71.4 | 75.5 | 98.3 |
| Elastic modulus | | (MPa) | 408.1 | 274.1 | 271.4 | 259.8 | 273.2 | 300.9 | 226.7 | 264.7 | 186.4 | 251.8 | 133.3 |
| Cleanability for soot stain | | ΔE | 22 | 5.6 | 10.5 | 7.0 | 3.5 | 2.7 | 0.2 | 2.2 | 3.7 | 5.2 | 4.3 |
| | | Evaluation | ○○ | ○ | ○ | ○ | ○ | ○ | ○ | ○○ | ○ | ○ | ○ |
| Cleanability for cement stain | | (N) | 4.8 | 4.2 | 2.6 | 1.7 | 2.6 | 1.9 | 1.0 | 4.9 | 3.7 | 4.1 | 3.6 |
| | | Evaluation | ○ | ○ | ○ | ○ | ○ | ○ | ○ | ○ | ○ | ○ | ○ |
| Cleanability for coating material stain | | (Points) | 0 | 0 | 0 | 0 | 0 | 0 | 10 | 0 | 0 | 0 | 0 |
| | | Evaluation | ○ | ○ | ○ | ○ | ○ | ○ | × | ○ | ○ | ○ | ○ |
| Film formability | | | Film can be formed | Film can be formed | Film can be formed | Film can be formed | Film can be formed | Film can be formed | Film can be formed | Film can be formed | Film can be formed | Film can be formed | Film can be formed |
| Evaluation (soot + cement) | | | ○○ | ○ | ○ | ○ | ○ | ○ | ○○ | ○○ | ○ | ○ | ○ |
| Evaluation (soot + cement + coating material) | | | ○○ | ○ | ○ | ○ | ○ | ○ | ○ | ○ | ○ | ○ | ○ |

[Table 2]

| | | | Example 12 | Example 13 | Example 14 | Example 15 | Example 16 | Example 17 | Example 18 | Example 19 | Comparative Example 1 | Comparative Example 2 | Comparative Example 3 | Comparative Example 4 |
|---|---|---|---|---|---|---|---|---|---|---|---|---|---|---|
| Urethane resin | | Super Flex 420 | 100 | 100 | 100 | 100 | 100 | 100 | 100 | 100 | - | - | 100 | 100 |
| | | ST-008E | - | - | - | - | - | - | - | - | - | - | - | - |
| | | UW-1005-E | - | - | - | - | - | - | - | - | 100 | - | - | - |
| | | SF460 | - | - | - | - | - | - | - | - | - | 100 | - | - |
| Colloidal silica | | SNOWTEX 30 | 5.0 | 7.5 | 12.5 | 25.0 | - | - | - | - | 12.5 | 12.5 | - | - |
| | | SNOWTEX C | - | - | - | - | - | - | - | - | - | - | 12.5 | - |
| | | SNOWTEX CM | - | - | - | - | 5.0 | 7.5 | 12.5 | 25.0 | - | - | - | - |
| Reactive silicone oil | Amino-modified silicone oil | POLON-MF-14EC | - | - | - | - | - | - | - | - | 5 | 5 | 100 | - |
| Contact angle | | (°) | 24.1 | 16.1 | 17.8 | 13.8 | 40.9 | 49.7 | 46.0 | 42.4 | 53.8 | 47.8 | 109.4 | 37.1 |
| Elastic modulus | | (MPa) | 307.1 | 328.5 | 339.1 | 330.2 | 283.5 | 279.3 | 360.2 | 412.8 | 39.4 | 10.6 | 44.6 | 289.0 |
| Cleanability for soot stain | | ΔE | 1.19 | 0.64 | 0.22 | 0.10 | 4.47 | 1.30 | 2.89 | 4.31 | 2.99 | 4.92 | 12.23 | 2.53 |
| | | Evaluation | ○○ | ○○ | ○○ | ○○ | ○ | ○○ | ○ | ○ | ○ | ○ | × | × |
| Cleanability for cement stain | | (N) | 3.8 | 1.7 | 2.3 | 1.7 | 2.5 | 2.3 | 2.6 | 3.0 | 21.1 | 77.0 | 7.5 | 5.6 |
| | | Evaluation | ○ | ○ | ○ | ○ | ○ | ○ | ○ | ○ | × | × | × | × |
| Cleanability for coating material stain | | (Points) | 10 | 10 | 10 | 10 | 10 | 10 | 10 | 10 | 0 | 0 | 0 | 10 |
| | | Evaluation | × | × | × | × | × | × | × | × | ○ | ○ | | × |
| Film formability | | | Film can be formed | Film can be formed | Film can be formed | Film can be formed | Film can be formed | Film can be formed | Film can be formed | Film can be formed | Film can be formed | Film can be formed | Film can be formed | Film can be formed |

(continued)

| | Example 12 | Example 13 | Example 14 | Example 15 | Example 16 | Example 17 | Example 18 | Example 19 | Comparative Example 1 | Comparative Example 2 | Comparative Example 3 | Comparative Example 4 |
|---|---|---|---|---|---|---|---|---|---|---|---|---|
| Evaluation (soot + cement) | ○○ | ○○ | ○○ | ○○ | ○ | ○ | ○ | ○ | × | × | × | × |
| Evaluation (soot + cement + coating material) | △ | △ | △ | △ | △ | △ | △ | △ | × | × | × | × |

[Table 3]

| | | | Example 20 | Example 21 | Example 22 | Example 23 | Example 24 | Example 25 | Example 26 | Example 27 | Example 28 |
|---|---|---|---|---|---|---|---|---|---|---|---|
| Urethane resin | | Super Flex 420 | 100 | 100 | 100 | 100 | 100 | 100 | 100 | 100 | 100 |
| | | ST-008E | - | - | - | - | - | - | - | - | - |
| | | UW-1005E | - | - | - | - | - | - | - | - | - |
| | | SF460 | - | - | - | - | - | - | - | - | - |
| Colloidal silica | | SNOWTEX 30 | 12.5 | 12.5 | 12.5 | 12.5 | 12.5 | 12.5 | 12.5 | 12.5 | 12.5 |
| | | SNOWTEX C | - | - | - | - | - | - | - | - | - |
| | | SNOWTEX CM | - | - | - | - | - | - | - | - | - |
| Reactive silicone oil | Amino-modified silicone oil | POLON-MF-14EC | 7.5 | - | - | - | - | - | - | - | - |
| | | POLON-MF-14E | - | 7.5 | - | - | - | - | - | - | - |
| | | POLON-MF-14 | - | - | 7.5 | - | - | - | - | - | - |
| | | KM-9771 | - | - | - | 7.5 | - | - | - | - | - |
| | Epoxy-modified silicone oil | X-51-1264 | - | - | - | - | 7.5 | - | - | - | - |
| | Mercapto-modified silicone oil | KM-9769 | - | - | - | - | - | 7.5 | - | - | - |
| Non-reactive silicone oil | Phenyl-modified silicone oil | KM-9739 | - | - | - | - | - | - | 7.5 | - | - |
| | Long-chain alkyl-modified silicone oil | X-52-8046 | - | - | - | - | - | - | - | 7.5 | - |
| | Dimethyl silicone oil | KM-862T | - | - | - | - | - | - | - | - | 7.5 |

(continued)

| | | Example 20 | Example 21 | Example 22 | Example 23 | Example 24 | Example 25 | Example 26 | Example 27 | Example 28 |
|---|---|---|---|---|---|---|---|---|---|---|
| Contact angle | (°) | 83.7 | 85.8 | 85.3 | 86.6 | 80.3 | 62.3 | 62.3 | 48.1 | 65.3 |
| Elastic modulus | (MPa) | 412.6 | 407.0 | 395.6 | 384.3 | 294.8 | 374.0 | 345.5 | 336.4 | 330.5 |
| Cleanability for soot stain | ΔE | 2.6 | 7.5 | 7.3 | 6.9 | 5.9 | 1.7 | 6.5 | 3.7 | 8.6 |
| | Evaluation | ○ | ○ | ○ | ○ | ○ | ○○ | ○ | ○ | ○ |
| Cleanability for cement stain | (N) | 1.5 | 0.5 | 0.9 | 2.8 | 1.1 | 3.7 | 3.2 | 3.5 | 1.6 |
| | Evaluation | ○ | ○ | ○ | ○ | ○ | ○ | ○ | ○ | ○ |
| Cleanability for coating material stain | (Points) | 0 | 0 | 0 | 0 | 2 | 0 | 10 | 10 | 10 |
| | Evaluation | ○ | ○ | ○ | ○ | ○ | ○ | × | × | × |
| Film formability | | Film can be formed | Film can be formed | Film can be formed | Film can be formed | Film can be formed | Film can be formed | Film can be formed | Film can be formed | Film can be formed |
| Evaluation (soot + cement) | | ○ | ○ | ○ | ○ | ○ | ○ | ○ | ○ | ○ |
| Evaluation (soot + cement + coating material) | | ○ | ○ | ○ | ○ | ○ | ○○ | Δ | Δ | Δ |

As shown in the above Tables 1 to 3, the compositions for coating film formation of Examples 1 to 28 contained a water-based resin and a colloidal silica, and an elastic modulus of the coating film produced using the composition was 100 MPa or more. Therefore, it was found that the cleanability for soot stains and the cleanability for cement stains were excellent.

Among the compositions for coating film formation of Examples, when the contact angle was small, there was a tendency that the cleanability for soot stains and the cleanability for cement stains were more excellent.

Among the compositions for coating film formation of Examples, when the contact angle was within the range of 60° to 100°, there was a tendency that not only the cleanability for soot stains and the cleanability for cement stains but also the cleanability for coating material stains was excellent.

It was found that, among the compositions for coating film formation of Examples, the compositions for coating film formation, which contain the reactive silicone oil, are excellent in the cleanability for coating material stains.

On the other hand, in the compositions for coating film formation of Comparative Examples 1 to 3, the elastic modulus of the coating film produced using the composition was as low as less than 100 MPa. Therefore, the result was that the cleanability for cement stains was poor.

The composition for coating film formation of Comparative Example 4 did not contain a colloidal silica, and therefore, the result was that the cleanability for cement stains was poor. This suggests that, even when the elastic modulus of the coating film formed by the composition for coating film formation is 100 MPa or more, in the case where the composition did not contain a colloidal silica, the effect of the combination with the water-based resin cannot be obtained, and the effect of improving the cleanability for cement stains cannot be obtained.

Although various embodiments have been described above with reference to the drawings, the present invention is not limited to these examples. It is apparent to those skilled in the art that various alterations or modifications can be conceived within the scope described in the claims, and it is understood that the alterations or modifications naturally fall within the technical scope of the present invention. In addition, the components described in the above embodiments may be freely combined without departing from the spirit of the present invention.

This application is based on a Japanese patent application (No. 2022-050819) filed on March 25, 2022, the contents of which are incorporated as a reference in the present application.

REFERENCE SIGNS LIST

21 coating film
22 soot and cement or the like
31 adherend

## Claims

1. A composition for coating film formation, including:

   a water-based resin; and
   a colloidal silica,
   in which a measurement coating film sample 1 has an elastic modulus of 100 MPa or more, and the measurement coating film sample 1 is prepared by the following method:
   applying the composition for coating film formation on a surface of a PET film having a thickness of 75 μm such that a WET thickness is 500 μm; performing drying at 22°C for 24 hours to form a coating film on the PET film; and cutting the coating film in an area of 10 mm × 100 mm to prepare the measurement coating film sample 1.

2. The composition for coating film formation according to claim 1, wherein a content of the colloidal silica is 30 parts by mass or less with respect to 100 parts by mass of the water-based resin.

3. The composition for coating film formation according to claim 1, wherein the water-based resin is a polyurethane-based resin.

4. The composition for coating film formation according to claim 1, further comprising a reactive silicone oil.

5. The composition for coating film formation according to claim 4, wherein the reactive silicone oil is an amino-modified silicone oil.

**6.** The composition for coating film formation according to claim 1, wherein a contact angle of a measurement coating film sample 2 is 60° to 100°, and the measurement coating film sample 2 is prepared by the following method: applying the composition for coating film formation on a surface of a PET film having a thickness of 75 μm such that a WET thickness is 500 μm; and performing drying at 22°C for 24 hours to form a coating film on the above PET film to prepare the measurement coating film sample 2.

**7.** A coating film made of the composition for coating film formation according to any one of claims 1 to 6.

**8.** A coating film-attached article comprising the coating film according to claim 7.

FIG. 1

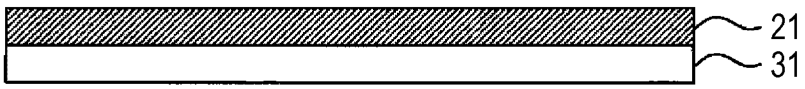


FIG. 2

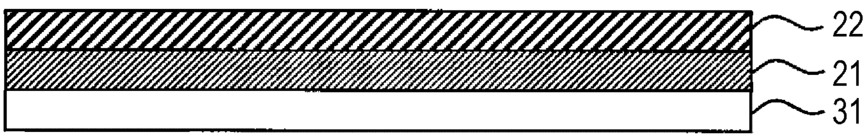


FIG. 3

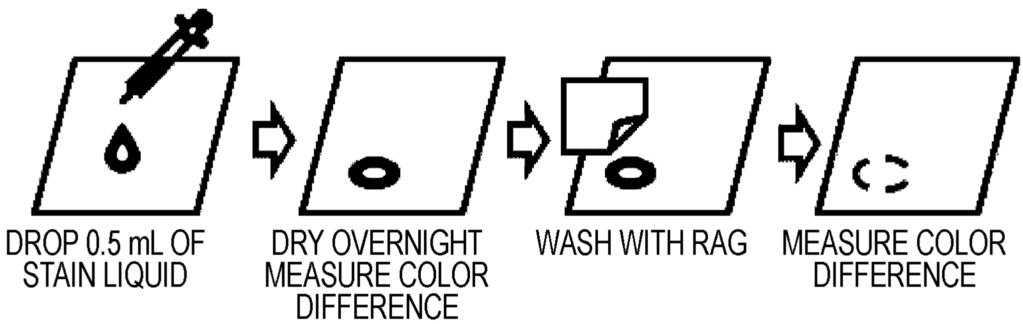

FIG. 4

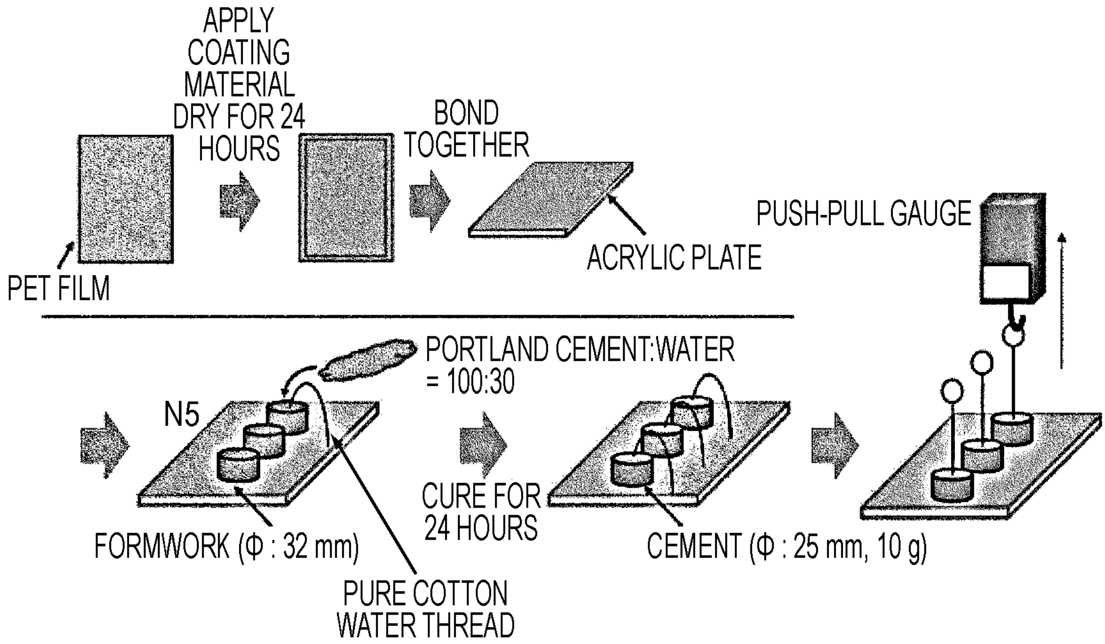
APPLY
COATING
MATERIAL
DRY FOR 24
HOURS
BOND
TOGETHER
PUSH-PULL GAUGE
ACRYLIC PLATE
PET FILM
PORTLAND CEMENT:WATER
= 100:30
N5
CURE FOR
24 HOURS
FORMWORK (Φ : 32 mm)
CEMENT (Φ : 25 mm, 10 g)
PURE COTTON
WATER THREAD

FIG. 5

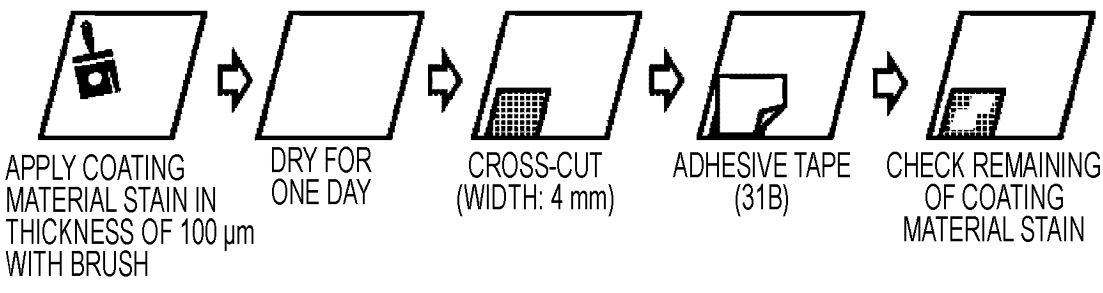
APPLY COATING
MATERIAL STAIN IN
THICKNESS OF 100 μm
WITH BRUSH
DRY FOR
ONE DAY
CROSS-CUT
(WIDTH: 4 mm)
ADHESIVE TAPE
(31B)
CHECK REMAINING
OF COATING
MATERIAL STAIN

**INTERNATIONAL SEARCH REPORT**

International application No. **PCT/JP2023/011395**

**A. CLASSIFICATION OF SUBJECT MATTER**

***C09D 201/00***(2006.01)i; ***C09D 5/16***(2006.01)i; ***C09D 7/61***(2018.01)i; ***C09D 7/63***(2018.01)i; ***C09D 175/04***(2006.01)i
FI: C09D201/00; C09D7/61; C09D175/04; C09D7/63; C09D5/16

According to International Patent Classification (IPC) or to both national classification and IPC

**B. FIELDS SEARCHED**

Minimum documentation searched (classification system followed by classification symbols)

C09D1/00-10/00; C09D101/00-201/10; B32B; C09K3/18

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br><br><br>A | JP 2021-138830 A (ASAHI KASEI KABUSHIKI KAISHA) 16 September 2021 (2021-09-16) claims, paragraphs [0002]-[0006], [0011], [0012], [0025], [0030]-[0038], [0053], [0054], [0064], all examples (in particular, examples 7-9) | 1-3, 7-8<br><br><br>4-6 |
| X<br><br>A | JP 2015-078274 A (UBE INDUSTRIES, LTD.) 23 April 2015 (2015-04-23) claims, paragraphs [0008], [0094], [0108]-[0110], [0116], examples | 1-3, 7-8<br><br>4-6 |
| X | JP 2005-314495 A (DAINICHISEIKA COLOR & CHEMICALS MFG. CO., LTD.) 10 November 2005 (2005-11-10) claims, paragraphs [0014]-[0018], [0025], examples, paragraph [0049] | 1-3, 7-8 |
| X | JP 2005-248091 A (TOHO CHEM IND CO., LTD.) 15 September 2005 (2005-09-15) claims, paragraphs [0005], [0007], [0014], [0021], [0022], [0028], [0029], examples | 1, 3, 7-8 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **05 June 2023** | **13 June 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**

International application No.
**PCT/JP2023/011395**

**C. DOCUMENTS CONSIDERED TO BE RELEVANT**

| Category* | Citation of document, with indication, where appropriate, of the relevant passages | Relevant to claim No. |
|---|---|---|
| A | ポリウレタン水分散体スーパーフレックス. 第一工業製薬株式会社. [online] [retrieved on 02 June 2023], Internet: <URL: https://www.dks-web.co.jp/pdf/catalog/superflex.pdf>, (Superflex Water-dispersed polyurethanes. DKS Co., Ltd.) pp. 2, 5-8 | 1-8 |
| A | KR 10-1039344 B1 (DONG YANG FLOOR CO., LTD.) 08 June 2011 (2011-06-08) paragraph [0030] | 4-5 |
| A | JP 2017-057356 A (KANSAI PAINT CO., LTD.) 23 March 2017 (2017-03-23) paragraph [0039] | 1-8 |

Form PCT/ISA/210 (second sheet) (January 2015)

**INTERNATIONAL SEARCH REPORT**
**Information on patent family members**

International application No.
**PCT/JP2023/011395**

| Patent document cited in search report | Publication date (day/month/year) | Patent family member(s) | Publication date (day/month/year) |
|---|---|---|---|
| JP 2021-138830 A | 16 September 2021 | (Family: none) | |
| JP 2015-078274 A | 23 April 2015 | (Family: none) | |
| JP 2005-314495 A | 10 November 2005 | (Family: none) | |
| JP 2005-248091 A | 15 September 2005 | (Family: none) | |
| KR 10-1039344 B1 | 08 June 2011 | (Family: none) | |
| JP 2017-057356 A | 23 March 2017 | CN 106543871 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 4721667 B


### Non-patent literature cited in the description


- **WERNER STOBER et al.** *J.Colloid and Interface Sci.*, 1968, vol. 26, 62-69
- **RICKEY D.BADLEY et al.** *Langmuir*, 1990, vol. 6, 792-801
- *Journal of the Japan Society of Colour Material*, 1988, vol. 61 (9), 488-493